# FASCICULE DE BREVET EUROPEEN

(11) **EP 0 739 104 B1**
(45) Date de publication et mention de la délivrance du brevet: **29.06.2005**
(21) Numéro de dépôt: 96200908.0
(22) Date de dépôt: 03.04.1996
(51) Int. Cl.: H04H 1/00

(54) **Récepteur autoradio muni d'une mémoire pour stocker des éléments de vocabulaire prédéterminés**
Autoradio mit Datenspeicher zur Speicherung von bestimmten Sprachelementen
Car radio receiver comprising a memory for storing certain elements of vocabulary

(30) Priorité: 12.04.1995 FR 9504401
(43) Date de publication de la demande: 23.10.1996
(73) Titulaire: Siemens Aktiengesellschaft, 80333 München (DE)
(72) Inventeur: Zorer, Jean-Louis, 75008 Paris (FR)

(56) Documents cités:
- WO-A-82/00381
- WO-A-92/19093
- WO-A-94/22243
- FR-A- 2 496 070
- US-A- 4 785 420
- US-A- 4 857 030
- US-A- 5 274 560

## Description

La présente invention concerne un récepteur autoradio muni d'une mémoire de vocabulaire contenant des descriptions d'éléments de vocabulaire, mémoire dans laquelle chacune des descriptions d'éléments de vocabulaire est adressable à partir d'un code constitué par un nombre désignant un élément de vocabulaire, l'ensemble des nombres désignant les éléments de vocabulaire utiles pour un usager donné constituant une séquence de nombres dans laquelle sont présentes des solutions de continuité entre des groupes de nombres consécutifs, un groupe de nombres consécutifs étant appelé segment.

Un tel récepteur autoradio est notamment destiné à recevoir et exploiter des signaux dits RDS/TMC. Il peut délivrer des messages d'information sur la circulation ou destinés au guidage d'un véhicule en inscrivant les messages sur un écran et/ou en les délivrant par synthèse vocale.

La présente invention concerne aussi un module de génération de messages d'information routière, comportant ou étant associé à une mémoire de vocabulaire qui contient des descriptions d'éléments de vocabulaire, mémoire dans laquelle chacune des descriptions d'éléments de vocabulaire est adressable à partir d'un code constitué par un nombre désignant un élément de vocabulaire, l'ensemble des nombres désignant les éléments de vocabulaire utiles pour un usager donné constituant une séquence de nombres dans laquelle sont présentes des solutions de continuité entre des groupes de nombres consécutifs, un groupe de nombres consécutifs étant appelé segment.

La présente invention concerne encore une carte portative, destinée à être utilisée dans un appareil de génération de messages, comportant une mémoire de vocabulaire contenant des descriptions d'éléments de vocabulaire, mémoire dans laquelle chacune des descriptions d'éléments de vocabulaire est adressable à partir d'un code constitué par un nombre désignant un élément de vocabulaire, l'ensemble des nombres désignant les éléments de vocabulaire utiles pour un usager donné constituant une séquence de nombres dans laquelle sont présentes des solutions de continuité entre des groupes de nombres consécutifs, un groupe de nombres consécutifs étant appelé segment.

Un récepteur d'émissions radiophoniques dans lequel sont traités des signaux numériques d'informations de circulation, et qui comprend une mémoire pour transformer les signaux numériques en informations compréhensibles est connu du document EP-A-0 263 332. Selon ce document, la mémoire est subdivisée en sous-ensembles contenant chacun les données d'une partie d'une route, correspondant à une ville rencontrée sur cette partie de route. Néanmoins l'ensemble des codes et des définitions d'éléments de vocabulaire constituent aujourd'hui une base de données qui est définie et qui groupe les éléments de vocabulaire d'une façon qui ne correspond pas forcément à la proposition de ce document et qui peut plus être modifiée.

WO-A 92 19 093 décrit un récepteur autoradio RDS muni d'une carte portative qui contient une vocabulaire et des codes de lieu.

Un objet de l'invention est, à partir de l'ensemble des codes et des éléments de vocabulaire tel qu'il est défini, de réduire la taille de la mémoire de vocabulaire du récepteur et aussi d'assurer un accès rapide, préférablement l'accès le plus rapide possible à un élément de vocabulaire, à partir de son code.

L'objet de l'invention est donc un récepteur autoradio selon la revendication 1.

A cet effet, le récepteur autoradio selon l'invention est remarquable en ce que les descriptions correspondant aux codes contenus dans les différents segments sont placées bout à bout dans la mémoire de vocabulaire, et le récepteur comporte une mémoire auxiliaire qui contient des données numériques permettant de déterminer, à partir de l'un des susdits codes, la position de la description correspondante dans la mémoire de vocabulaire.

L'invention est donc basée sur l'idée de tasser au maximum les groupes dans la mémoire de vocabulaire, malgré la complication introduite par la nécessité d'utiliser un adressage indirect pour accéder à un groupe

Une première manière de gérer la mémoire de vocabulaire est d'utiliser une mémoire auxiliaire qui contient, en correspondance avec chacun des codes de la série de codes utiles pour un usager donné, l'adresse du début de la description correspondante dans la mémoire de vocabulaire.

Une seconde manière de gérer la mémoire de vocabulaire est d'utiliser une mémoire auxiliaire qui contient, pour un segment donné :
- la plus petite valeur de code comprise dans le segment,
- la plus grande valeur de code comprise dans le segment,
- et la position dans la mémoire de vocabulaire de la description correspondant au code situé à une des limites du segment.

Avec cette mémoire auxiliaire il suffit, à partir d'une valeur de code donnée, de la comparer tour à tour aux limites des segments successifs trouvés dans la mémoire auxiliaire, pour trouver le segment qui contient la description de l'élément de vocabulaire correspondant à ce code, et dès lors obtenir sa position dans la mémoire de vocabulaire.

De préférence, une mémoire dite "d'arbre" contient l'adresse dans la mémoire auxiliaire des données concernant un segment et, en correspondance avec cette adresse, d'autres adresses qui sont celles, dans la mémoire auxiliaire, de données concernant d'autres segments, parmi ceux qui sont en dessous du dit segment donné et ceux qui sont au dessus du dit segment donné. De préférence, la mémoire d'arbre contient, en correspondance avec l'adresse concernant un segment, l'adresse dans la mémoire auxiliaire des données concernant un autre segment de la suite des segments, situé pratiquement au milieu de ceux qui sont en dessous du dit segment donné et l'adresse dans cette même mémoire auxiliaire des données concernant un autre segment, situé pratiquement au milieu de ceux qui sont au dessus du dit segment donné.

Ceci permet d'utiliser un processus en arbre pour la recherche d'un segment, afin d'aller plus vite.

Le récepteur est avantageusement muni d'un lecteur de carte amovible, et la mémoire de vocabulaire ainsi que la mémoire auxiliaire sont contenues dans une carte amovible.

Ainsi l'appareil est facilement adaptable à des régions différentes, en changeant tout simplement de carte.

Un module de génération de messages d'information routière selon l'invention est remarquable en ce que, les descriptions correspondant aux codes contenus dans les différents segments étant placées bout à bout dans la mémoire de vocabulaire, le module comporte ou est associé à une mémoire auxiliaire qui contient des données numériques permettant de déterminer, à partir de l'un des susdits codes, la position de la description correspondante dans la mémoire de vocabulaire, et il est muni de moyens pour, à l'aide de la dite mémoire auxiliaire, déterminer la position d'une description dans la mémoire de vocabulaire.

Dans une première forme de réalisation, un tel module est muni de moyens pour rechercher, dans la mémoire auxiliaire, l'adresse du début d'une description dans la mémoire de vocabulaire, en correspondance avec chacun des codes de la série de codes utiles pour un usager donné.

Dans une deuxième forme de réalisation, il est muni de moyens pour rechercher, dans la mémoire auxiliaire, pour un segment donné :
- la plus petite valeur de code comprise dans le segment,
- la plus grande valeur de code comprise dans le segment,
- et la position dans la mémoire de vocabulaire de la description correspondant au code situé à une des limites du segment.

Avantageusement, un tel module comporte, ou est associé à, une mémoire dite "d'arbre" et est muni de moyens pour y rechercher l'adresse des données concernant un segment et, en correspondance avec cette adresse, d'autres adresses qui sont celles, dans cette même mémoire auxiliaire, de données concernant d'autres segments, parmi ceux qui sont en dessous du dit segment donné et ceux qui sont au dessus du dit segment donné. De préférence, il est muni de moyens pour rechercher, dans la mémoire d'arbre, en correspondance avec l'adresse concernant un segment, l'adresse dans la mémoire auxiliaire des données concernant un autre segment de la suite des segments, situé pratiquement au milieu de ceux qui sont en dessous du dit segment donné et l'adresse dans cette même mémoire auxiliaire des données concernant un autre segment, situé pratiquement au milieu de ceux qui sont au dessus du dit segment donné.

Dans une carte portative, destinée à être utilisée dans un appareil de génération de messages, les descriptions correspondant aux codes contenus dans les différents segments sont avantageusement placées bout à bout dans la mémoire de vocabulaire, et la carte comporte une mémoire auxiliaire qui contient des données numériques permettant de déterminer, à partir de l'un des susdits codes, la position de la description correspondante dans la mémoire de vocabulaire.

Dans une première forme de réalisation, la mémoire auxiliaire d'une telle carte contient, en correspondance avec chacun des codes de la série de codes utiles pour un usager donné, l'adresse du début de la description correspondante dans la mémoire de vocabulaire.

Dans une deuxième forme de réalisation, la mémoire auxiliaire contient, pour un segment donné :
- la plus petite valeur de code comprise dans le segment,
- la plus grande valeur de code comprise dans le segment,
- et la position dans la mémoire de vocabulaire de la description correspondant au code situé à une des limites du segment.

Avantageusement, une telle carte comporte une mémoire dite "d'arbre" qui contient l'adresse dans la mémoire auxiliaire des données concernant un segment et, en correspondance avec cette adresse, d'autres adresses qui sont celles, dans la mémoire auxiliaire, de données concernant d'autres segments, parmi ceux qui sont en dessous du dit segment donné et ceux qui sont au dessus du dit segment donné. De préférence, cette mémoire d'arbre contient, en correspondance avec l'adresse concernant un segment, l'adresse dans la mémoire auxiliaire des données concernant un autre segment de la suite des segments, situé pratiquement au milieu de ceux qui sont en dessous du dit segment donné et l'adresse dans cette même mémoire auxiliaire des données concernant un autre segment, situé pratiquement au milieu de ceux qui sont au dessus du dit segment donné.

Ces aspects de l'invention ainsi que d'autres aspects plus détaillés apparaîtront plus clairement grâce à la description suivante d'un mode de réalisation constituant un exemple non limitatif.
La figure 1 représente schématiquement un récepteur autoradio équipé de l'invention.
La figure 2 représente plus en détail la partie concernée par l'invention, et ses connexions avec le reste de l'appareil.
Les figures 3 et 4 illustrent deux exemples d'arbres permettant de trouver un segment dans une séquence de nombres désignant les éléments de vocabulaire.

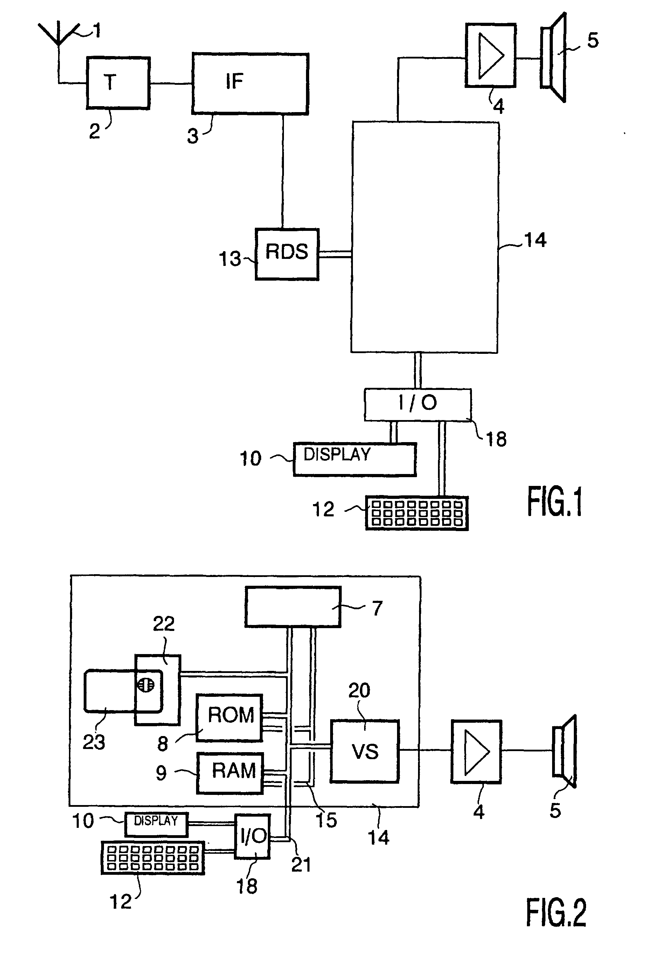

Le récepteur de la figure 1 comporte, à partir d'une antenne 1, un dispositif 2 ("tuner") contenant un circuit de syntonisation et un circuit de changement de fréquence, suivi d'un dispositif 3 contenant un amplificateur à fréquence intermédiaire et un démodulateur.

Dans le procédé dit RDS ("Radio Data System"), une sous-porteuse FM est modulée par des signaux numériques de données, utiles à la réception des différents émetteurs d'une même chaîne. Un décodeur 13 de messages RDS connu est présent.

Dans le cas du procédé connu dit "TMC" (Traffic Message Channel"), des messages d'information sur la circulation sont incorporés dans certains champs numériques des signaux RDS, par exemple : "bouchon trois km avant l'entrée de Paris".

Pour traiter les messages TMC, le récepteur comporte un module 14, auquel les données RDS du décodeur 13 sont amenées pour être analysées et éventuellement mémorisées. Pour permettre de délivrer des messages sous forme vocale, ce module 14 est aussi relié à un système amplificateur audio 4 suivi d'un haut-parleur 5. Il est relié aussi à un dispositif d'interface entrée/sortie 18 relié à un clavier de commande 12 et à un écran d'affichage 10, par exemple à cristaux liquides.

Sur la figure 2, le module 14 comprend un microcontrôleur 7 qui génère des signaux de contrôle et traite les signaux qui sortent des différents dispositifs, auxquels il est relié par un bus d'adresses 15 et par un bus de données 21. En outre il sélectionne et prépare des données numériques définissant des éléments parlés pour un module synthétiseur de parole 20 connu en soi, qui fournit de façon connue les signaux analogiques voulus à l'amplificateur audio 4 suivi du haut-parleur 5. Le module 14 comprend aussi une mémoire volatile 8 dite "RAM", pour le stockage d'une couche logicielle utilisée à un instant donné par le microcontrôleur 7 et aussi pour le stockage provisoire des contenus de champs TMC à traiter, une mémoire permanente 9 pour le stockage de descriptions de vocabulaire fixées une fois pour toutes, et une mémoire 22, 23 constituée d'un lecteur 22 de carte à mémoire et d'une carte à mémoire amovible 23, par exemple de type PCMCIA, dans laquelle sont stockés plus spécialement les descriptions d'éléments de vocabulaire spécifiques correspondant à un usager et/ou à une région donnés.

Les messages TMC standard sont constitués de plusieurs champs de données numériques, reçus dans les données RDS, et qui désignent les éléments de vocabulaire à chaque fois par leur code :
- un 1^{er} champ, de 11 bits, contient le code d'un élément de vocabulaire décrivant un événement,
- un 2^{e} champ, de 16 bits, contient le code d'un élément de vocabulaire définissant le lieu concerné par l'événement en question,
- un 3^{e} champ, de 3 bits, contient le code d'un élément de vocabulaire décrivant une extension du lieu concerné,
- un 4^{e} champ, de 1 bit, décrivant le sens du trajet concerné,
- un 5^{e} champ, de 3 bits, donnant la durée de validité du message,
- un 6^{e} champ, de 1 bit, indiquant s'il est recommandé ou non de prendre une déviation.

Le contenu de chacun des champs doit être traité de façon à exprimer en clair ce dont il s'agit. Pour cela est prévue une mémoire permanente, dans laquelle sont stockées des informations en clair (sous forme par exemple des codes ASCII des caractères d'un message à afficher), à des adresses correspondant aux différents contenus possibles de chaque champ, ce qui permet de retrouver les informations à partir du contenu d'un champ.

Par exemple, le 1^{er} champ (décrivant un événement), qui comporte 11 bits, est associé à une mémoire qui peut contenir en clair 2048 éléments de vocabulaire (soit 2¹¹ éléments de vocabulaire), chacun étant trouvé à l'adresse définie par le contenu du champ. Ces éléments de vocabulaire disent par exemple "bouchon", "travaux", "accident", etc. Ils sont placés dans la mémoire 9.

Le 2^{e} champ (décrivant un lieu), qui comporte 16 bits, est associé à une mémoire, dite mémoire des points de localisation, qui peut contenir en clair jusqu'à 65536 éléments de vocabulaire (soit 2¹⁶ éléments de vocabulaire) qui comprennent des données complètes sur notamment des noms de lieux, leur type, la région à laquelle ils appartiennent, les points suivant et précédent, etc, chaque élément de vocabulaire étant en principe trouvé à une adresse désignée par le contenu du champ. Ces éléments de vocabulaire sont par exemple "Paris", ou "Lille", ou "la sortie 21", etc. Ils sont placés dans la mémoire 23.

Dans le 3^{e} champ, différents types d'extensions sont définis. On entend par extension le fait que l'événement considéré s'étend par exemple jusqu'à la localisation suivante.

Dans le 4^{e} champ, un bit 0 signifie par exemple "sens Paris → Lille", alors qu'un bit 1 signifierait "sens Lille → Paris" (on sait qu'on est sur une liaison entre Paris et Lille par le contenu du champ 2, seul le sens manquait).

La nature d'un problème est définie par les informations en clair correspondant à un code contenu dans le champ 1, et l'emplacement où se situe ce problème est défini par les informations correspondant à un code du champ 2. Les codes contenus dans ce champ 2 sont appelés "PL" (Point de Localisation). Ils sont représentés par des nombres, et il y a des solutions de continuité dans la séquence de ces nombres. Par exemple pour définir les points de localisation de la vallée du Rhin, les nombres PL vont de 258 à 264, puis ensuite de 930 à 983, et ainsi de suite.

Il est prévu pour décrire chaque point de localisation (chaque nom de lieu) 170 octets de données. Dans le cas de la vallée du Rhin, le plus grand nombre PL est 50004, donc avec une mémoire des points de localisation dans laquelle l'adresse des données décrivant un point de localisation serait le code lui même, il faudrait une capacité de mémoire de 50004 fois 170 octets, soit 8500680 octets.

On a pensé à réduire la taille de la mémoire de vocabulaire contenant les descriptions des points de localisation. A cet effet, on considère dans la base de données normalisée les seuls points de localisation qui sont utiles dans une région donnée, et pour lesquels les nombres PL sont consécutifs. Ils forment des groupes dits "segments". Dans la mémoire des points de localisation du récepteur, ces segments sont concaténés, c'est-à-dire mis les uns à la suite des autres sans solution de continuité. Grâce à cette organisation, on peut se contenter d'une mémoire de taille limitée. Avec les segments ainsi concaténés, on pourrait imaginer, pour trouver l'appartenance d'un code à un segment donné, d'utiliser une mémoire auxiliaire qui contienne, pour chacun des 50004 codes possibles (cas de la vallée du Rhin), l'indication directe de la position des données décrivant le point de localisation dans la mémoire de vocabulaire. Dans ce cas, la capacité totale de la mémoire (descriptions des points de localisation + mémoire auxiliaire) serait pour les descriptions des points de localisation : 1285 fois 170 octets, soit 218450 octets, et pour la mémoire auxiliaire : deux octets pour chaque nombre PL de la gamme complète des nombres PL, soit 50004 fois 2 octets = 100008 octets, c'est-à-dire au total 318458 octets seulement, au lieu de 8500680 octets.

L'appartenance d'un code à un segment peut aussi être retrouvée avec une mémoire auxiliaire contenant le plus petit et le plus grand nombre PL de chacun des segments, et dans laquelle la position réelle des descriptions correspondant au segment est également indiquée en donnant la position d'une des limites correspondant à ce segment dans la mémoire de vocabulaire, par exemple la position de sa limite inférieure, que l'on appelera "offset". Pour retrouver le segment dans lequel se trouve un nombre PL donné, il faut alors comparer ce nombre PL donné avec le plus petit et le plus grand nombre PL de chaque segment (trouvés dans la mémoire auxiliaire), jusqu'à trouver celui qui contient le nombre PL donné. Pour obtenir l'adresse de la description du point de localisation correspondant à PL dans la mémoire de vocabulaire, il suffit alors d'ajouter à l'offset un déplacement qui est la différence entre le nombre PL donné et le plus petit nombre contenu dans le segment. Dans le cas de la vallée du Rhin déjà exemplifiée plus haut, il y a 196 segments, il faudrait donc dans la mémoire auxiliaire 196 fois 6 octets (2 pour le plus petit nombre du segment, 2 pour le plus grand, et 2 pour la position du segment) soit 1176 octets, avec toujours 218450 octets pour la mémoire des points de localisation, ce qui demanderait au total 219626 octets, au lieu des 318458 octets mentionnés plus haut, mais la détermination d'une adresse est alors un peu plus longue.

Néanmoins, il est également possible de diminuer considérablement le temps nécessaire pour l'accès à la description d'un point de localisation. Pour cela on considère l'ordre dans lequel les segments sont rangés dans la mémoire de vocabulaire, ordre basé sur la valeur des nombres PL contenus dans les segments. On dira qu'un second segment est au dessus par rapport à un premier si le plus petit nombre PL du second est plus grand que le plus grand nombre PL du premier.

On stocke alors dans un élément de mémoire dit "mémoire d'arbre" des données représentant un arbre par lequel on accède aux segments. En pratique, cela signifie qu'on stocke dans cet élément de mémoire des blocs de données appelés noeuds, qui définissent chacun un segment tout en indiquant l'adresse dans la même mémoire d'arbre, de deux autres noeuds. Par exemple le noeud racine, dit de niveau "0", définit le segment médian c'est-à-dire placé pratiquement au milieu de la séquence des segments, et il indique deux autres noeuds, à savoir :
- un premier noeud, dit de niveau "-1", qui définit
   - un segment placé pratiquement au milieu de la pluralité de segments situés en dessous du dit segment médian,
   - et à son tour deux autres noeuds, de niveau "-2",
- un second noeud, également de niveau "-1", qui définit
   - un segment placé pratiquement au milieu de la pluralité de segments situés au dessus du dit segment médian,
   - et à son tour deux autres noeuds, de niveau "-2".

Par les mot "pratiquement au milieu", on entend notamment que lorsque le nombre des segments est pair, il n'y a pas de segment rigoureusement au milieu.

Quand un code est recherché, sur la base de son nombre PL, il suffit de suivre l'arbre jusqu'à trouver le segment comprenant le nombre PL. La profondeur de l'arbre, c'est-à-dire le nombre maximum d'étapes de recherche pour trouver un segment comprenant un nombre PL donné, est au plus égal au logarithme base 2 du nombre total de segments contenus dans la mémoire de vocabulaire. La mémoire auxiliaire qui contient pour chaque segment le plus petit et le plus grand nombre PL de chacun des segments, et la position réelle du segment, constitue avantageusement la mémoire d'arbre en ajoutant à chaque fois les adresses de deux autres noeuds.

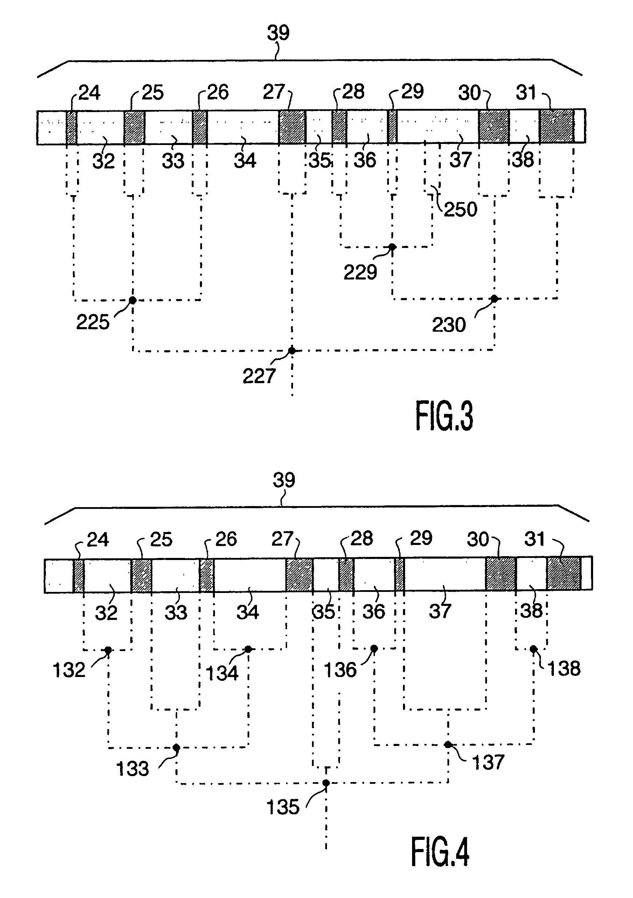

Pour illustrer la manière préférée d'organiser le suivi d'un arbre, la figure 3 représente symboliquement sous la forme d'un rectangle allongé 39 une séquence de nombres PL. Il s'agit de la séquence complète prévue par la normalisation pour l'ensemble de tous les points de localisation possibles : elle comprend donc 65536 positions. Néanmoins dans une base de données concernant un pays, seuls certains point de localisations sont définis. Ils sont groupés en segments 24, 25, 26, 27, 28, 29, 30, 31, représentés hachurés, qui contiennent des codes désignant des point de localisations définis, et il y a des solutions de continuité 32, 33, 34, 35, 36, 37, 38 entre les segments. Le noeud racine (profondeur 0) de l'arbre, correspondant à la référence 227, contient entre autres le nombre le plus petit et le nombre le plus grand du segment 27. La comparaison du nombre PL donné avec ces deux nombres fournit trois possibilités : soit ce nombre est dans le segment 27, et il ne reste plus qu'à calculer l'adresse de la description du point de location comme expliqué plus haut, soit il est à droite sur la figure (nombres plus grands) ou à gauche (nombres plus petits). Au niveau du noeud racine 227 sont également indiquées les adresses dans la mémoire auxiliaire des noeuds médians respectivement au dessous 225 et au dessus 230, ce qui permet de suivre l'arbre, en choisissant l'une ou l'autre de ces adresses selon le résultat de la comparaison.

Si le nombre PL est plus grand que le nombre le plus grand du segment 27, le noeud suivant, de profondeur -1, est celui correspondant à la référence 230 ; il contient le nombre le plus petit et le nombre le plus grand du segment 30. Si le nombre PL est plus petit que le nombre le plus petit du segment 27, le noeud suivant, de profondeur "-1", est celui correspondant à la référence 225 ; il contient le nombre le plus petit et le nombre le plus grand du segment 25. A nouveau la comparaison du nombre PL donné avec ces deux nombres fournit trois possibilités : soit ce nombre est dans le segment 25, et il ne reste plus qu'à calculer l'adresse de la description du point de location comme expliqué plus haut, soit il est à droite ou à gauche sur la figure. Par exemple, à droite, l'adresse indiquée comme noeud médian suivant par le noeud 225 contient le nombre le plus petit et le nombre le plus grand du segment 26, et un code indiquant qu'on est arrivé au bout de l'arbre. Il en est de même pour les autres segments 24, 28, 31. Dans certains cas, la subdivision de l'arbre en branches conduit à au moins un noeud terminal qui ne correspond pas à un segment : c'est le cas ici pour le "pseudo-segment" 250 à droite du noeud 229 ; alors un code indique que ce segment est vide, soit au niveau de ce segment, soit plutôt au niveau du noeud amont (229).

La figure 4 est destinée à illustrer une variante dans la manière d'organiser le suivi d'un arbre. Elle est basée sur les solutions de continuité entre les segments au lieu des segments, mais elle est plus complexe à mettre en oeuvre que la manière préférée. Le noeud racine (profondeur 0) de l'arbre, correspondant à la référence 135, contient le nombre le plus petit du segment 28 et le nombre le plus grand du segment 27, de part et d'autre de la solution de continuité 35. La comparaison du nombre PL donné avec ces deux nombres aiguille vers la droite (nombres plus grands) de la figure ou vers la gauche (nombres plus petits). Au niveau du noeud racine 135 sont également indiquées les adresses dans la mémoire auxiliaire des noeuds médians respectivement inférieur 133 et supérieur 137, ce qui permet de suivre l'arbre. Si le nombre PL est plus petit que le nombre le plus grand du segment 27, le noeud suivant, de profondeur "-1", correspondant à la référence 133, contient le nombre le plus petit du segment 26 et le nombre le plus grand du segment 25. Si le nombre PL est plus grand que le nombre le plus petit du segment 28, le noeud suivant, de profondeur "-1", correspondant à la référence 137, contient le nombre le plus petit du segment 30 et le nombre le plus grand du segment 29. Au noeud 133, la comparaison du nombre PL donné avec le nombre le plus petit du segment 26 et le nombre le plus grand du segment 25 aiguille vers la droite de la figure ou vers la gauche, et ainsi de suite avec les noeuds de profondeur -2, correspondant aux références 132, 134, 136, 138, dont l'un conduit enfin au segment cherché.

Les caractéristiques d'un segment (le plus petit et le plus grand code contenu dans le segment, et l'offset), et les données permettant de trouver dans la même mémoire les noeuds suivants de l'arbre peuvent être empilées dans la même mémoire qui est alors à la fois la mémoire d'arbre et la mémoire auxiliaire. Il faut 10 octets de données pour définir chaque segment dans la mémoire auxiliaire, à savoir : 2 octets pour indiquer le plus petit nombre PL et 2 octets pour indiquer le plus grand nombre PL du segment, 2 octets pour l'offset, et 2 octets pour chacune des deux adresses de segments suivants de l'arbre. Dans le cas de la vallée du Rhin déjà exemplifiée plus haut avec 196 segments, il faut donc dans la mémoire auxiliaire 196 fois 10 octets soit 1960 octets, avec toujours 218450 octets pour la mémoire des points de localisation, ce qui demande au total 220410 octets. L'arbre a une profondeur de huit. Les 220410 octets nécessaires sont à peine plus nombreux que les 219626 octets mentionnés plus haut sans utilisation d'un arbre, alors que l'accès est beaucoup plus rapide avec l'arbre.

## Revendications

1. Récepteur autoradio muni d'une mémoire de vocabulaire contenant des descriptions d'éléments de vocabulaire, mémoire dans laquelle chacune des descriptions d'éléments de vocabulaire est adressable à partir d'un code constitué par un nombre désignant un élément de vocabulaire, l'ensemble des nombres désignant les éléments de vocabulaire utiles pour un usager donné constituant une séquence de nombres dans laquelle sont présentes des solutions de continuité entre des groupes de nombres consécutifs, un groupe de nombres consécutifs étant appelé segment, **caractérisé en ce que** les descriptions correspondant aux codes contenus dans les différents segments sont placées bout à bout dans la mémoire de vocabulaire, et le récepteur comporte une mémoire auxiliaire qui contient des données numériques permettant de déterminer, à partir de l'un des susdits codes, la position de la description correspondante dans la mémoire de vocabulaire.

2. **Récepteur autoradio** selon la revendication 1,
**caractérisé en ce que** la mémoire auxiliaire contient, en correspondance avec chacun des codes de la série de codes utiles pour un usager donné, l'adresse du début de la description correspondante dans la mémoire de vocabulaire.

3. **Récepteur autoradio** selon la revendication 1,
**caractérisé en ce que** la mémoire auxiliaire contient, pour un segment donné :
- la plus petite valeur de code comprise dans le segment,
- la plus grande valeur de code comprise dans le segment,
- et la position dans la mémoire de vocabulaire de la description correspondant au code situé à une des limites du segment.

4. **Récepteur autoradio** selon la revendication 3,
**caractérisé en ce qu'**il comporte une mémoire dite "d'arbre" qui contient l'adresse dans la mémoire auxiliaire des données concernant un segment et, en correspondance avec cette adresse, d'autres adresses qui sont celles, dans la mémoire auxiliaire, de données concernant d'autres segments, parmi ceux qui sont en dessous du dit segment donné et ceux qui sont au dessus du dit segment donné.

5. **Récepteur autoradio** selon la revendication 4,
**caractérisé en ce que** la mémoire d'arbre contient, en correspondance avec l'adresse concernant un segment, l'adresse dans la mémoire auxiliaire des données concernant un autre segment de la suite des segments, situé pratiquement au milieu de ceux qui sont en dessous du dit segment donné et l'adresse dans cette même mémoire auxiliaire des données concernant un autre segment, situé pratiquement au milieu de ceux qui sont au dessus du dit segment donné.

6. **Récepteur autoradio** selon l'une quelconque des revendications précédentes, **caractérisé en ce qu'**il est muni d'un lecteur de carte amovible, et que la mémoire de vocabulaire et la mémoire auxiliaire sont contenues dans une carte amovible.

7. Module de génération de messages d'information routière, destiné à être utilisé dans un récepteur autoradio selon la revendication 1 comportant ou étant associé à une mémoire de vocabulaire qui contient des descriptions d'éléments de vocabulaire, mémoire dans laquelle chacune des descriptions d'éléments de vocabulaire est adressable à partir d'un code constitué par un nombre désignant un élément de vocabulaire, l'ensemble des nombres désignant les éléments de vocabulaire utiles pour un usager donné constituant une séquence de nombres dans laquelle sont présentes des solutions de continuité entre des groupes de nombres consécutifs, un groupe de nombres consécutifs étant appelé segment, **caractérisé en ce que**, les descriptions correspondant aux codes contenus dans les différents segments étant placées bout à bout dans la mémoire de vocabulaire, le module comporte où est associé à une mémoire auxiliaire qui contient des données numériques permettant de déterminer, à partir de l'un des susdits codes, la position de la description correspondante dans la mémoire de vocabulaire, et il est muni de moyens pour, à l'aide de la dite mémoire auxiliaire, déterminer la position d'une description dans la mémoire de vocabulaire.

8. **Module de génération de messages** d'information routière selon la revendication 7, **caractérisé en ce qu'**il est muni de moyens pour rechercher, dans la mémoire auxiliaire, l'adresse du début d'une description dans la mémoire de vocabulaire, en correspondance avec chacun des codes de la série de codes utiles pour un usager donné.

9. **Module de génération de messages** d'information routière selon la revendication 7, **caractérisé en ce qu'**il est muni de moyens pour rechercher, dans la mémoire auxiliaire, pour un segment donné :
- la plus petite valeur de code comprise dans le segment,
- la plus grande valeur de code comprise dans le segment,
- et la position dans la mémoire de vocabulaire de la description correspondant au code situé à une des limites du segment.

10. **Module de génération de messages** d'information routière selon la revendication 9, **caractérisé en ce qu'**il comporte ou est associé à une mémoire dite "d'arbre" et est muni de moyens pour y rechercher l'adresse des données concernant un segment et, en correspondance avec cette adresse, d'autres adresses qui sont celles, dans cette même mémoire auxiliaire, de données concernant d'autres segments, parmi ceux qui sont en dessous du dit segment donné et ceux qui sont au dessus du dit segment donné.

11. **Module de génération de messages** d'information routière selon la revendication 10, **caractérisé en ce qu'**il est muni de moyens pour rechercher, dans la mémoire d'arbre, en correspondance avec l'adresse concernant un segment, l'adresse dans la mémoire auxiliaire des données concernant un autre segment de la suite des segments, situé pratiquement au milieu de ceux qui sont en dessous du dit segment donné et l'adresse dans cette même mémoire auxiliaire des données concernant un autre segment, situé pratiquement au milieu de ceux qui sont au dessus du dit segment donné.

12. Carte portative, destinée à être utilisée dans un récepteur autoradio selon la revendication 1, comportant une mémoire de vocabulaire contenant des descriptions d'éléments de vocabulaire, mémoire dans laquelle chacune des descriptions d'éléments de vocabulaire est adressable à partir d'un code constitué par un nombre désignant un élément de vocabulaire, l'ensemble des nombres désignant les éléments de vocabulaire utiles pour un usager donné constituant une séquence de nombres dans laquelle sont présentes des solutions de continuité entre des groupes de nombres consécutifs, un groupe de nombres consécutifs étant appelé segment, **caractérisée en ce que** les descriptions correspondant aux codes contenus dans les différents segments sont placées bout à bout dans la mémoire de vocabulaire, et la carte comporte une mémoire auxiliaire qui contient des données numériques permettant de déterminer, à partir de l'un des susdits codes, la position de la description correspondante dans la mémoire de vocabulaire.

13. **Carte portative** selon la revendication 12, **caractérisée en ce que** la mémoire auxiliaire contient, en correspondance avec chacun des codes de la série de codes utiles pour un usager donné, l'adresse du début de la description correspondante dans la mémoire de vocabulaire.

14. **Carte portative** selon la revendication 12, **caractérisée en ce que** la mémoire auxiliaire contient, pour un segment donné :
- la plus petite valeur de code comprise dans le segment,
- la plus grande valeur de code comprise dans le segment,
- et la position dans la mémoire de vocabulaire de la description correspondant au code situé à une des limites du segment.

15. **Carte portative** selon la revendication 14, **caractérisée en ce qu'**elle comporte une mémoire dite "d'arbre" qui contient l'adresse dans la mémoire auxiliaire des données concernant un segment et, en correspondance avec cette adresse, d'autres adresses qui sont celles, dans la mémoire auxiliaire, de données concernant d'autres segments, parmi ceux qui sont en dessous du dit segment donné et ceux qui sont au dessus du dit segment donné.

16. **Carte portative** selon la revendication 15, **caractérisée en ce que** la mémoire d'arbre contient, en correspondance avec l'adresse concernant un segment, l'adresse dans la mémoire auxiliaire des données concernant un autre segment de la suite des segments, situé pratiquement au milieu de ceux qui sont en dessous du dit segment donné et l'adresse dans cette même mémoire auxiliaire des données concernant un autre segment, situé pratiquement au milieu de ceux qui sont au dessus du dit segment donné.

## Patentansprüche

1. Mit einem Sprachspeicher ausgestatteter Autoradio-Empfänger, der Beschreibungen von Wortschatzelementen enthält, wobei in dem Sprachspeicher jede Beschreibung von Wortschatzelementen auf der Basis eines Codes adressierbar ist, der aus einer ein Wortschatzelement bezeichnenden Zahl besteht, wobei die Menge der die für einen bestimmten Benutzer nützlichen Wortschatzelemente bezeichnenden Zahlen aus einer Zahlenreihe besteht, in welcher Kontinuitätslösungen zwischen aus aufeinanderfolgenden Zahlen bestehenden Zahlengruppen vorhanden sind, wobei eine aus aufeinanderfolgenden Zahlen bestehende Zahlengruppe als Segment bezeichnet wird, **dadurch gekennzeichnet, daß** im Sprachspeicher die den in den verschiedenen Segmenten enthaltenen Codes entsprechenden Beschreibungen hintereinander geordnet werden und d er Empfänger einen Hilfsspeicher aufweist, der digitale Daten enthält zum Bestimmen, ausgehend von dem einen der vorgenannten Codes, der Position der entsprechenden Beschreibung im Sprachspeicher.

2. Autoradio-Empfänger gemäß Patentanspruch 1
**dadurch gekennzeichnet, daß** der Hilfsspeicher, jeweils jedem einzelnen Code in der Reihe von für einen bestimmten Benutzer nützlichen Codes zugeordnet, die Adresse im Sprachspeicher von dem Anfang der entsprechenden Beschreibung enthält.

3. Autoradio-Empfänger gemäß Patentanspruch 1
**dadurch gekennzeichnet, daß** der Hilfsspeicher, für ein bestimmtes Segment,
- den kleinsten Codewert, der im Segment vorhanden ist,
- den größten Codewert, der im Segment vorhanden ist, und
- die Position im Sprachspeicher der Beschreibung, die dem an der einen der Grenzen des Segmentes liegenden Code entspricht,
enthält.

4. Autoradio-Empfänger gemäß Patentanspruch 3
**dadurch gekennzeichnet, daß** er einen sogenannten "Baum"-Speicher aufweist, welcher die Adresse im Hilfsspeicher der einen bestimmten Segment betreffenden Daten enthält und jeweils in Verbindung mit dieser Adresse weitere Adressen enthält, die diejenigen Adressen im Hilfsspeicher von Daten sind, welche andere Segmente betreffen, die zu denjenigen gehören, die sich unterhalb von dem genannten bestimmten Segment befinden, bzw. zu denjenigen, die sich oberhalb von dem genannten bestimmten Segment befinden.

5. Autoradio-Empfänger gemäß Patentanspruch 4
**dadurch gekennzeichnet, daß** der Baum-Speicher jeweils in Verbindung mit der einen bestimmten Segment betreffenden Adresse die Adresse im Hilfsspeicher der Daten enthält, die ein anderes Segment in d er Reihe der Segmente betreffen, welches praktisch in der Mitte derjenigen Segmenten liegt, die sich unterhalb von dem genannten bestimmten Segment befinden, und die Adresse in demselben Hilfsspeicher der Daten enthält, die ein anderes Segment in der Reihe der Segmente betreffen, welches praktisch in der Mitte derjenigen Segmente liegt, die sich oberhalb von dem genannten bestimmten Segment befinden.

6. Autoradio-Empfänger gemäß irgendeinem der vorhergehenden Patentansprüche
**dadurch gekennzeichnet, daß** er einen Kartenleser für tragbare Speicherkarten aufweist und daß der Sprachspeicher und der Hilfsspeicher in einer tragbaren Speicherkarte enthalten sind.

7. Für den Einsatz im Autoradio-Empfänger gemäß Patentanspruch 1 vorgesehener Modul zur Erzeugung von Straßenverkehrsnachrichten, wobei der Modul einen Beschreibungen von Wortschatzelementen enthaltenden Sprachspeicher aufweist bzw. mit einem solchen Sprachspeicher gekoppelt ist, wobei in dem Sprachspeicher jede Beschreibung von Wortschatzelementen auf der Basis eines Codes adressierbar ist, der aus einer ein Wortschatzelement bezeichnenden Zahl besteht, wobei die Menge der die für einen bestimmten Benutzer nützlichen Wortschatzelemente bezeichnenden Zahlen aus einer Zahlenreihe besteht, in welcher Kontinuitätslösungen zwischen aus aufeinanderfolgenden Zahlen bestehenden Zahlengruppen vorhanden sind, wobei eine aus aufeinanderfolgenden Zahlen bestehende Zahlengruppe als Segment bezeichnet wird,
**dadurch gekennzeichnet, daß**, ausgehend von der Tatsache, daß die Beschreibungen, welche den in den verschiedenen Segmenten enthaltenen Codes entsprechen, im Sprachspeicher aneinander gereiht sind, der Modul einen Hilfsspeicher aufweist bzw. mit einem solchen Hilfsspeicher gekoppelt ist, der digitale Daten zur Bestimmung der Position im Sprachspeicher der zugehörigen Beschreibung enthält, wobei diese Bestimmung von einer der vorgenannten Codes ausgeht, und Mittel zum Bestimmen mit Hilfe des genannten Hilfsspeichers der Position einer Beschreibung im Sprachspeicher aufweist.

8. Modul zur Erzeugung von Straßenverkehrsnachrichten gemäß Patentanspruch 7 **dadurch gekennzeichnet, daß** er Mittel zum Suchen in dem Hilfsspeicher, jeweils jedem einzelnen Code in der Reihe von für einen bestimmten Benutzer nützlichen Codes zugeordnet, der Adresse im Sprachspeicher von dem Anfang einer Beschreibung aufweist.

9. Modul zur Erzeugung von Straßenverkehrsnachrichten gemäß Patentanspruch 7 **dadurch gekennzeichnet, daß** er Mittel zum Suchen in dem Hilfsspeicher, für ein bestimmtes Segment,
- des kleinsten Codewertes, der im Segment vorhanden ist,
- des größten Codewertes, der im Segment vorhanden ist, und
- der Position im Sprachspeicher der Beschreibung, die dem an der einen der Grenzen des Segmentes liegenden Code entspricht, aufweist.

10. Modul zur Erzeugung von Straßenverkehrsnachrichten gemäß Patentanspruch 9 **dadurch gekennzeichnet, daß** er einen sogenannten "Baum"-Speicher aufweist bzw. mit einem solchen Baum-Speicher gekoppelt ist und Mittel zum Suchen der Adresse der ein bestimmtes Segment betreffenden Daten und zum Suchen in Verbindung mit dieser Adresse von weiteren Adressen, die diejenigen Adressen im Hilfsspeicher von Daten sind, welche andere Segmente betreffen, die zu denjenigen gehören, die sich unterhalb von dem genannten bestimmten Segment befinden, bzw. zu denjenigen, die sich oberhalb von dem genannten bestimmten Segment befinden, aufweist.

11. Modul zur Erzeugung von Straßenverkehrsnachrichten gemäß Patentanspruch 10 **dadurch gekennzeichnet, daß** er Mittel zum Suchen in dem Baum-Speicher jeweils in Verbindung mit der Adresse, die ein bestimmtes Segment betrifft, der Adresse im Hilfsspeicher der Daten, die ein anderes Segment in der Reihe der Segmente betreffen, welches praktisch in der Mitte derjenigen Segmente liegt, die sich unterhalb von dem genannten bestimmten Segment befinden und der Adresse in diesem gleichen Hilfsspeicher der Daten, die ein anderes Segment in der Reihe der Segmente betreffen, welches praktisch in der Mitte derjenigen Segmente liegt, die sich oberhalb von dem genannten bestimmten Segment befinden, aufweist.

12. Tragbare Speicherkarte für den Einsatz in einem Autoradio-Empfänger gemäß Patentanspruch 1, wobei die Speicherkarte einen Beschreibungen von Wortschatzelementen enthaltenden Sprachspeicher aufweist, wobei in dem Sprachspeicher jede Beschreibung von Wortschatzelementen auf der Basis eines Codes adressierbar ist, der aus einer ein Wortschatzelement bezeichnenden Zahl besteht, wobei die Menge der die für einen bestimmten Benutzer nützlichen Wortschatzelemente bezeichnenden Zahlen aus einer Zahlenreihe besteht, in welcher Kontinuitätslösungen zwischen aus aufeinanderfolgenden Zahlen bestehenden Zahlengruppen vorhanden sind, wobei eine aus aufeinanderfolgenden Zahlen bestehende Zahlengruppe als Segment bezeichnet wird,
**dadurch gekennzeichnet, daß** die Beschreibungen, weiche den in den verschiedenen Segmenten enthaltenen Codes entsprechen, im Sprachspeicher aneinander gereiht sind, und die Speicherkarte einen Hilfsspeicher aufweist, der digitale Daten zur Bestimmung der Position im Sprachspeicher der zugehörigen Beschreibung enthält, wobei diese Bestimmung von einer der vorgenannten Codes ausgeht.

13. Tragbare Speicherkarte gemäß Patentanspruch 12 **dadurch gekennzeichnet, daß** der Hilfsspeicher, jeweils jedem einzelnen Code in der Reihe von für einen bestimmten Benutzer nützlichen Codes zugeordnet, die Adresse im Sprachspeicher von dem Anfang der zugehörigen Beschreibung enthält.

14. Tragbare Speicherkarte gemäß Patentanspruch 12 **dadurch gekennzeichnet, daß** der Hilfsspeicher, für ein bestimmtes Segment,
- den kleinsten Codewert, der im Segment vorhanden ist,
- den größten Codewert, der im Segment vorhanden ist, und
- die Position im Sprachspeicher der Beschreibung, die dem an der einen der Grenzen des Segmentes liegenden Code entspricht,
enthält.

15. Tragbare Speicherkarte gemäß Patentanspruch 14 **dadurch gekennzeichnet, daß** die Speicherkarte einen sogenannten "Baum"-Speicher aufweist, der die Adresse der ein bestimmtes Segment betreffenden Daten enthält und in Verbindung mit dieser Adresse weitere Adressen enthält, die diejenigen Adressen im Hilfsspeicher von Daten sind, welche andere Segmente betreffen, die zu denjenigen gehören, die sich unterhalb von dem genannten bestimmten Segment befinden, bzw. zu denjenigen, die sich oberhalb von dem genannten bestimmten Segment befinden.

16. Tragbare Speicherkarte gemäß Patentanspruch 15 **dadurch gekennzeichnet, daß** der Baum-Speicher, jeweils der ein bestimmtes Segment betreffenden Adresse zugeordnet, die Adresse im Hilfsspeicher der Daten enthält, die ein anderes Segment in der Reihe der Segmente betreffen, das praktisch in der Mitte derjenigen Segmente liegt, die s ich unterhalb von dem genannten bestimmten Segment befinden, sowie die Adresse in diesem gleichen Hilfsspeicher der Daten, die ein anderes Segment betreffen, das praktisch in der Mitte derjenigen Segmente liegt, die sich oberhalb von dem genannten bestimmten Segment befinden.

## Claims

1. Car radio receiver provided with a vocabulary memory containing descriptions of vocabulary elements, memory in which each of the vocabulary element descriptions is addressable on the basis of a code made up of a number denoting a vocabulary element, the set of numbers denoting the vocabulary elements useful for a given user forming a sequence of numbers containing solutions of continuity between groups of consecutive numbers, a group of consecutive numbers being called a segment, **characterized in that** the descriptions corresponding to the codes contained in the different segments are placed end-to-end in the vocabulary memory, and the receiver includes an auxiliary memory which contains digital data for determining, on the basis of one of the abovementioned codes, the position of the corresponding description in the vocabulary memory.

2. Car radio receiver according to Claim 1, **characterized in that** the auxiliary memory contains, in connection with each of the codes of the series of useful codes for a given user, the start address of the corresponding description in the vocabulary memory.

3. Car radio receiver according to Claim 1, **characterized in that** the auxiliary memory contains, for a given segment:
- the smallest code value contained in the segment,
- the largest code value contained in the segment,
- and the position in the vocabulary memory of the description corresponding to the code located at one of the segment limits.

4. Car radio receiver according to Claim 3, **characterized in that** it includes a "tree" memory which contains the address in the auxiliary memory of the data concerning a segment and, in connection with this address, other addresses that are those, in the auxiliary memory, of data concerning other segments, among those that are below said given segment and those that are above said given segment.

5. Car radio receiver according to Claim 4, **characterized in that** the tree memory contains, in connection with the address concerning a segment, the address in the auxiliary memory of the data concerning another segment of the sequence of segments, located practically in the middle of those that are below said given segment and the address in this same auxiliary memory of the data concerning another segment, located practically in the middle of those that are above said given segment.

6. Car radio receiver according to any one of the preceding claims, **characterized in that** it is provided with a removable card reader, and that the vocabulary memory and the auxiliary memory are contained in a removable card.

7. Module for generating traffic information messages, designed to be used in a car radio receiver according to Claim 1 including or being associated with a vocabulary memory which contains descriptions of vocabulary elements, memory in which each of the vocabulary element descriptions is addressable on the basis of a code made up of a number denoting a vocabulary element, the set of the numbers denoting the vocabulary elements useful for a given user forming a sequence of numbers containing solutions of continuity between groups of consecutive numbers, a group of consecutive numbers being called a segment, **characterized in that**, the descriptions corresponding to the codes contained in the different segments being placed end-to-end in the vocabulary memory, the module includes or is associated with an auxiliary memory which contains digital data for determining, on the basis of one of the abovementioned codes, the position of the corresponding description in the vocabulary memory, and it is provided with means for determining the position of a description in the vocabulary memory, using said auxiliary memory.

8. Module for generating traffic information messages according to Claim 7, **characterized in that** it is provided with means for searching, in the auxiliary memory, for the start address of a description in the vocabulary memory, in connection with each of the codes of the useful series of codes for a given user.

9. Module for generating traffic information messages according to Claim 7, **characterized in that** it is provided with means for searching in the auxiliary memory, for a given segment, for:
- the smallest code value contained in the segment,
- the largest code value contained in the segment,
- and the position in the vocabulary memory of the description corresponding to the code located at one of the segment limits.

10. Module for generating traffic information messages according to Claim 9, **characterized in that** it includes or is associated with a "tree" memory and is provided with means for searching therein for the address of the data concerning a segment and, in connection with this address, other addresses which are those, within this same auxiliary memory, of data concerning other segments, among those that are below said given segment and those that are above said given segment.

11. Module for generating traffic information messages according to Claim 10, **characterized in that** it is provided with means for searching, in the tree memory, in connection with the address concerning a segment, for the address in the auxiliary memory of the data concerning another segment of the sequence of segments, located practically in the middle of those that are below said given segment and the address in this same auxiliary memory of the data concerning another segment, located practically in the middle of those that are above said given segment.

12. Portable card, designed to be used in a car radio receiver according to Claim 1, including a vocabulary memory containing descriptions of vocabulary elements, memory in which each of the vocabulary element descriptions is addressable on the basis of a code formed by a number denoting a vocabulary element, the set of the numbers denoting the vocabulary elements useful for a given user forming a sequence of numbers containing solutions of continuity between groups of consecutive numbers, a group of consecutive numbers being called a segment, **characterized in that** the descriptions corresponding to the codes contained in the different segments are placed end-to-end in the vocabulary memory, and the card includes an auxiliary memory which contains digital data for determining the position of the corresponding description in the vocabulary memory, based on one of the abovementioned codes.

13. Portable card according to Claim 12, **characterized in that** the auxiliary memory contains, in connection with each of the codes of the series of useful codes for a given user, the start address of the corresponding description in the vocabulary memory.

14. Portable card according to Claim 12, **characterized in that** the auxiliary memory contains, for a given segment:
- the smallest code value contained in the segment,
- the largest code value contained in the segment,
- and the position in the vocabulary memory of the description corresponding to the code located at one of the segment limits.

15. Portable card according to Claim 14, **characterized in that** it includes a "tree" memory which contains the address in the auxiliary memory of the data concerning a segment and, in connection with this address, other addresses which are those, in the auxiliary memory, of data concerning other segments, among those that are below said given segment and those that are above said given segment.

16. Portable card according to Claim 15, **characterized in that** the tree memory contains, in connection with the address concerning a segment, the address in the auxiliary memory of the data concerning another segment of the sequence of segments, located practically in the middle of those that are below said given segment and the address in this same auxiliary memory of the data concerning another segment, located practically in the middle of those that are above said given segment.
